**Europäisches Patentamt**

**European Patent Office**

**Office européen des brevets**

(11) Veröffentlichungsnummer: **0 142 112 B1**

(12) **EUROPÄISCHE PATENTSCHRIFT**

(45) Veröffentlichungstag der Patentschrift:
28.10.87

(51) Int. Cl.⁴: **G 05 B 19/403**

(21) Anmeldenummer: **84113287.1**

(22) Anmeldetag: **05.11.84**

(54) Handhabungseinrichtung, insbesondere Industrieroboter, mit mindestens einem Sensor.

(30) Priorität: **11.11.83 DE 3340946**

(43) Veröffentlichungstag der Anmeldung:
**22.05.85 Patentblatt 85/21**

(45) Bekanntmachung des Hinweises auf die Patenterteilung:
**28.10.87 Patentblatt 87/44**

(84) Benannte Vertragsstaaten:
**AT BE CH DE FR GB IT LI LU NL SE**

(56) Entgegenhaltungen:
**ELEKTRONIK, Band 31, Nr. 8, April 1982, Seiten 89-95, München, DE; R. DILLMANN et al.:
"Kraft-Momenten-Sensorsystem für Industrieroboter"
REGELUNGSTECHNISCHE PRAXIS, Band 24, Nr. 2, Februar 1982, Seiten 35-40, München, DE; G. HIRZINGER et al.: "Roboter mit Kraft-Momenten-Fühlern"
IEEE 1981 IECI PROCEEDINGS, "APPLICATIONS OF MINI AND MICROCOMPUTERS", 9.-12. November 1981, Seiten 324-329, San Francisco, California, US; G.E. COOK et al.: "Microcomputer control of an adaptive positioning system for robotic arc welding"**

(73) Patentinhaber: **Siemens Aktiengesellschaft Berlin und München, Wittelsbacherplatz 2, D-8000 München 2 (DE)**

(72) Erfinder: **Niedermayr, Erich, Dipl.-Ing., bei Dr. Lechner Keuslinstrasse 6, D-8000 München 40 (DE)**

## Beschreibung

Die Erfindung betrifft eine Handhabungseinrichtung, insbesondere Industrieroboter, mit einer Steuereinrichtung und mindestens einem über ein Interface an die Steuereinrichtung angeschlossenen Sensor; vgl. z.B. «Elektronik» 8/23.4.82, S. 89–95.

Von entscheidender Bedeutung für den erfolgreichen Einsatz von Handhabungseinrichtungen und insbesondere von in mehreren Bewegungsachsen frei programmierbaren, mit Greifern oder Werkzeugen ausgerüsteten Industrierobotern ist deren Adaptionsfähigkeit, d.h. die Fähigkeit sich an verschiedene Teile und Umwelteinflüsse anpassen zu können. Hierzu werden verschiedene Sensoren, insbesondere optische und taktile Sensoren eingesetzt, die mit dem Industrieroboter gekoppelt werden und dessen Arbeitsablauf entsprechend beeinflussen. Speziell in der Montagetechnik werden neben den optischen Sensoren zur Lagebestimmung der Teile vor allem taktile Sensoren wie Weg-, Kraft-, oder Momentensensoren benötigt, mit denen die einzelnen Montagevorgänge kontrolliert werden können. In den meisten Fällen sind dazu die anfallenden Signale der Sensoren zu klassifizieren, d.h. die Signale sind mit bestimmten Schwellwerten zu vergleichen. Soll beispielsweise eine Büchse auf eine Welle aufgedrückt werden, so ermöglichen bereits zwei Schwellwerte bzw. drei Signal-Bereiche eines entsprechenden Kraftsensors eine Reihe für den Montagevorgang entscheidender Aussagen. Überschreitet die Kraft einen bestimmten oberen Schwellwert, so kann der Fehler beispielsweise in einem zu geringen Spiel oder in einem Verkanten der Büchse liegen. Liegt die Kraft in einem mittleren Bereich zwischen dem oberen Schwellwert und einem unteren Schwellwert, so kann auf eine richtig durchgeführte Montage geschlossen werden. Unterschreitet dagegen die Kraft den unteren Schwellwert, so kann dies auf ein zu geringes Spiel, auf ein Fehlen der Büchse oder dgl. zurückgeführt werden. Die Bedeutung des Signals eines Sensors ist dabei natürlich vom Zeitpunkt der Abfrage während eines Vorganges abhängig, d.h. es ist eine entsprechende Bearbeitung im Programmablauf erforderlich.

Die meisten Industrieroboter besitzen Steuereinrichtungen mit einfachen Verzweigungs- oder Interruptbefehlen, wobei der Status von binären Eingangssignalen oder Signalkombinationen ausschlaggebend ist. Dementsprechend werden dann Sensoren eingesetzt, die nur einfache Binärentscheidungen ermöglichen, wie z.B. Meldungen über Anwesenheit oder Vollständigkeit eines Werkstücks oder das Erreichen einer vorgegebenen Position, wobei die Schwellwerte durch die mechanische Konstruktion oder durch fest vorgebene Vergleichswerte konstant sind. Für komplexe Montageaufgaben sind derartige Binärentscheidungen jedoch unzureichend, weil eine Anpassung an die jeweiligen Gegebenheiten damit nicht möglich ist.

Es sind auch bereits Industrieroboter bekannt, bei welchen die digitalisierten Signale einzelner Sensoren direkt der zugehörigen Steuereinrichtung zugeführt und bei der Bearbeitung im Programmablauf zur Erzielung der erforderlichen Aussagen klassifiziert werden. Die hierfür erforderlichen Steuereinrichtungen sind jedoch aufwendig aufgebaut und für einen wirtschaftlichen Montageeinsatz von Industrierobotern häufig zu kostspielig.

Aus der Zeitschrift «VDI Nachrichten» Nr. 52/26.12.1980, Seite 13, ist es auch bekannt, bei Industrierobotern für die automatische Montage optische Sensoren zur Lageerkennung einzusetzen, die über ein spezielles Interface direkt an die Steuereinrichtung angeschlossen werden. Die Programmierung der optischen Sensoren ist dabei stark vereinfacht, indem Menus auf einem Monitor angeboten werden, und über Lichtgriffel ausgewählt bzw. Parameter festgelegt werden. Eine Übertragung dieser für optische Sensoren bekannten Technik auf Sensoren wie takile Sensoren, Ultraschall-Sensoren oder andere Sensoren mit Analogausgang, ist jedoch nicht möglich.

Der Erfindung liegt die Aufgabe zugrunde, bei Handhabungseinrichtungen mit einfach aufgebauten und preisgünstigen Steuereinrichtungen mit geringem Aufwand einen für komplexe Montageaufgaben geeigneten Einsatz von taktilen Sensoren und anderen Sensoren mit Analogausgang zu ermöglichen.

Diese Aufgabe wird bei einer Handhabungseinrichtung der eingangs genannten Art durch folgende Merkmale gelöst:

a) das Interface ist als programmierbares Sensor-Interface mit mindestens einem Mikroprozessor und mindestens einem Speicher ausgebildet,

b) jedem Sensor sind mindestens drei Signal-Bereiche zugeordnet, deren Bereichsgrenzen durch im Speicher hinterlegbare Schwellwerte vorgebbar sind,

c) der Mikroprozessor ist derart programmierbar, dass die Einordnung des jeweils anstehenden digitalisierten Signals eines Sensors in einen der zugeordneten Signal-Bereiche an die Steuereinrichtung übertragbar ist.

Der Anschluss eines Sensors oder mehrerer Sensoren erfolgt also über ein programmierbares Sensor-Interface, das auch durch die Ausrüstung mit einem Mikroprozessor als intelligentes Interface bezeichnet werden könnte, und eine Signalvorverarbeitung ermöglicht, deren Ergebnis dann an die Steuereinrichtung übergeben wird. Dabei werden die Analogsignale der Sensoren zunächst digitalisiert und dann in Signal-Bereiche eingeordnet, deren Bereichsgrenzen durch in einem Speicher hinterlegte Schwellwerte vorgegeben werden können. Die Einordnung des jeweils anstehenden Signals eines Sensors in einen der zugeordneten Signal-Bereiche wird an die Steuereinrichtung übertragen, so dass der mit dieser Einordnung verbundene Aufschluss über einen zu kontrollierenden Vorgang im Programmablauf entsprechend berücksichtigt werden kann. Der Aufwand für die Signalvorverarbeitung durch ein derartiges programmierbares Sensor-Interface ist dabei als relativ gering anzusehen.

Gemäss einer bevorzugten Ausgestaltung der Erfindung ist vorgesehen, dass jeder Sensor über die Steuereinrichtung auswählbar ist und dass die Einordnung des jeweils anstehenden digitalisierten Signals des ausgewählten Sensors in einen der zugeordneten Signal-Bereiche an die Steuereinrichtung übertragbar ist. Es kann also auf einfache Weise das Signal jedes einzelnen Sensors im Programmablauf gezielt abgefragt werden und das Ergebnis dieser gezielten Abfrage unmittelbar im weiteren Programmablauf berücksichtigt werden. Die Auswahl der Sensoren kann dabei so erfolgen, dass jeder Sensor über eine serielle Schnittstelle zwischen der Steuereinrichtung und einer zugeordneten Endeinrichtung auswählbar ist. Es ist aber auch möglich, dass jeder Sensor über parallele binäre Ausgangsleitungen der Steuereinrichtung auswählbar ist.

Gemäss einer besonders bevorzugten weiteren Ausgestaltung der Erfindung ist vorgesehen, dass über die Endeinrichtung und/oder die Steuereinrichtung und die serielle Schnittstelle jeder Sensor anwählbar ist und dass die Schwellwerte der Signal-Bereiche des angewählten Sensors in den Speicher übertragbar sind. Damit wird eine besonders einfache Programmierung ermöglicht, bei welcher der betreffende Sensor angewählt wird und dann die Schwellwerte seiner Bereichsgrenzen vorgegeben werden. Andererseits können dann aber auch die Schwellwerte der Bereichsgrenzen eines Sensors während des Programmablaufs variiert und flexibel an sich gegebenenfalls ändernde Bedingungen angepasst werden.

Weiterhin ist es zweckmässig, wenn dem programmierbaren Sensor-Interface eine Anzeigeeinrichtung zugeordnet ist, durch welche der jeweils ausgewählte Sensor, das digitalisierte Signal des jeweils ausgewählten Sensors und der diesem Signal zugeordnete Signal-Bereich erkennbar sind. Mit Hilfe dieser Anzeigeeinrichtung können dann insbesondere im Einrichtbetrieb die jeweils günstigsten Schwellwerte der Bereichsgrenzen ermittelt und dann in den Speicher aufgenommen werden.

Bei einer weiteren bevorzugten Ausgestaltung der Erfindung ist jedem Signal-Bereich der Sensoren eine binäre Eingangsleitung der Steuereinrichtung zugeordnet. Wird also das Signal eines ausgewählten Sensors in einen zugeordneten Signal-Bereich eingeordnet, so wird die diesem Signal-Bereich zugeordnete binäre Eingangsleitung gesetzt, während alle anderen binären Eingangsleitungen gelöscht werden.

Bei den Steuereinrichtungen einiger Handhabungseinrichtungen steht nur eine begrenzte Anzahl von binären Eingängen zur Verfügung. In diesem Fall ist es dann besonders günstig, wenn die binären Eingangsleitungen der Steuereinrichtung über einen Multiplexer wahlweise mit dem programmierbaren Sensor-Interface oder der Peripherie verbindbar sind.

Vorzugsweise sind die analogen Signale jedes Sensors einem Analog-Digital-Umsetzer des programmierbaren Sensor-Interface zuführbar. Eine derartige Integration des für die Digitalisierung des analogen Signals eines Sensors erforderlichen Analog-Digital-Umsetzers in das programmierbare Sensor-Interface ermöglicht eine besonders einfache Verknüpfung der entsprechenden Busse.

Gemäss einer weiteren Ausgestaltung der Erfindung besitzt das programmierbare Sensor-Interface ein paralleles Ausgabe-Interface, dessen binäre Ausgänge an zugeordnete binäre Eingangsleitungen der Steuereinrichtung angeschlossen sind. Ausserdem kann das programmierbare Sensor-Interface ein serielles Interface besitzen, welches an eine serielle Schnittstelle zwischen der Steuereinrichtung und einer zugeordneten Endeinrichtung angeschlossen ist. In entsprechender Weise kann das programmierbare Sensor-Interface auch ein paralleles Eingabe-Interface besitzen, an dessen binäre Eingänge binäre Ausgangsleitungen der Steuereinrichtung angeschlossen sind. Derartige Interfaces dienen zur einfachen Anpassung und zur Verbindung des programmierbaren Sensor-Interface mit der Steuereinrichtung und gegebenenfalls mit einer Endeinrichtung.

Eine weitere besonders vorteilhafte Ausgestaltung der Erfindung ist dadurch gekennzeichnet, dass ein programmierbarer Greifer mit mindestens einer Wegmesseinrichtung und/oder mindestens einer Kraftmesseinrichtung und mindestens einem Antriebsmotor vorgesehen ist, dass die digitalisierten Ist wert-Signale der Wegmesseinrichtung und/oder der Kraftmesseinrichtung dem Mikroprozessor zuführbar sind und dass der Antriebsmotor über die Steuereinrichtung, den Mikroprozessor und einen Digital-Analog-Umsetzer derart anwählbar ist, dass die Greiferstellung und/oder die Greiferkraft mit dem Mikroprozessor als Regelglied und dem Antriebsmotor als Stellglied auf vorgebbare Sollwerte einstellbar sind. Ist das programmierbare Sensor-Interface dabei über eine serielle Schnittstelle mit der Steuereinrichtung verbunden, so sind die Sollwerte für die Greiferstellung und/oder die Greiferkraft über die Steuereinrichtung und die serielle Schnittstelle vorgebbar. Diese Vorgabe der Sollwerte im Programmablauf ist dann aber nicht mehr möglich, wenn das programmierbare Sensor-Interface an parallele binäre Ausgangsleitungen der Steuereinrichtung angeschlossen ist. In diesem Fall sind dann die Sollwerte für die Greiferstellung und/oder die Greiferkraft im Speicher hinterlegbar.

Ausführungsbeispiele der Erfindung sind in der Zeichnung dargestellt und werden im folgenden näher beschrieben. Es zeigen:

Figur 1 einen Industrieroboter mit einem programmierbaren Sensor-Interface für serielle Betriebsart,

Figur 2 einen Industrieroboter mit einem programmierbaren Sensor-Interface für parallele Betriebsart,

Figur 3 einen Industrieroboter mit einem programmierbaren Sensor-Interface für serielle und/oder parallele Betriebsart,

Figur 4 ein Blockschaltbild des programmierbaren Sensor-Interface nach Figur 1,

Figur 5 ein Blockschaltbild des programmierbaren Sensor-Interface nach Figur 2,

Figur 6 ein Blockschaltbild des programmierbaren Sensor-Interface nach Figur 3,

Figur 7 einen Multiplexer für den wahlweisen Anschluss eines programmierbaren Sensor-Interface und der Peripherie an die Steuereinrichtung eines Industrieroboters,

Figur 8 ein Anwendungsbeispiel für die Klassifizierung von drei Bauteilen mit Hilfe einer Wegmessung,

Figur 9 ein Diagramm für die einem Weg-Sensor zugeordneten Signal-Bereiche bei der Klassifizierung der Bauteile nach Figur 8,

Figur 10 ein detailliertes Blockschaltbild einer für das programmierbare Sensor-Interface nach Figur 6 verwendbaren Mikrocomputer-Baugruppe,

Figur 11 ein detailliertes Blockschaltbild einer für das programmierbare Sensor-Interface nach Figur 6 verwendbaren Analog-Digital-Umsetzer-Baugruppe,

Figur 12 ein Blockschaltbild eines programmierbaren Sensor-Interface mit zusätzlicher Regelung von Greiferstellung und/oder Greiferkraft eines programmierbaren Greifers,

Figur 13 ein Struktogramm für das Hintergrundsprogramm des in den Figuren 3 und 6 dargestellten programmierbaren Sensor-Interface,

Figur 14 ein Struktogramm für die Interruptroutine beim Datenempfang des in den Figuren 3 und 6 dargestellten programmierbaren Sensor-Interface,

Figur 15 ein Struktogramm für die Interruptroutine bei der Datenausgabe des in den Figuren 3 und 6 dargestellten programmierbaren Sensor-Interface und

Figur 16 ein Struktogramm für die Interruptroutine bei der Bereichseinordnung und Bereichsausgabe des in den Figuren 3 und 6 dargestellten programmierbaren Sensor-Interface.

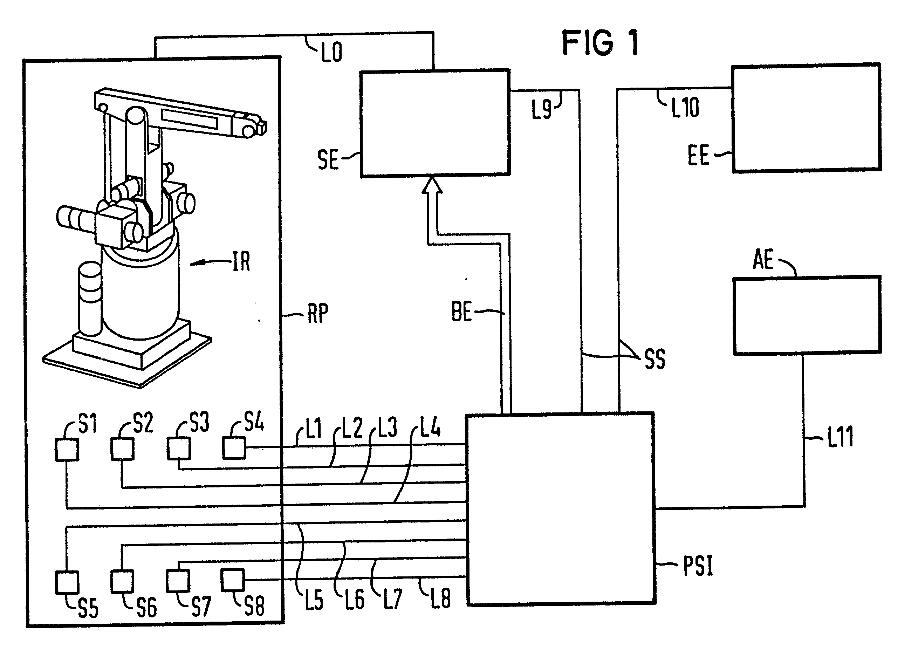

Figur 1 zeigt in stark vereinfachter schematischer Darstellung einen mit RP bezeichneten Kasten, welcher die Roboterkinematik einschliesslich der Peripherie darstellen soll und über eine Leitung LO mit einer Steuereinrichtung SE verbunden ist. Innerhalb des Kastens RP sind ein Industrieroboter IR und insgesamt acht Sensoren S1 bis S8 dargestellt, die am Arm des Industrieroboters IR oder in der Peripherie angeordnet sein können. Bei den Sensoren S1 bis S8 kann es sich um taktile Sensoren, wie Weg-, Kraft- und Momenten-Sensoren, um Ultraschall-Sensoren oder um beliebige andere Sensoren mit Analogausgang handeln.

Die Sensoren S1 bis S8 sind über Leitungen L1 bis L8 an ein programmierbares Sensor-Interface PSI angeschlossen, welches seinerseits über entsprechende Leitungen L9 und L10 an eine serielle Schnittstelle SS zwischen der Steuereinrichtung SE und einer zugeordneten Endeinrichtung EE angeschlossen ist und ausserdem noch an insgesamt acht binäre Eingangsleitungen BE der Steuereinrichtung SE angeschlossen ist. Bei der Endeinrichtung EE kann es sich beispielsweise um ein übliches Terminal oder um einen Drucker handeln. Wie aus Figur 1 ferner zu erkennen ist, ist das programmierbare Sensor-Interface PSI auch noch über eine Leitung L11 mit einer optischen Anzeigeeinrichtung AE verbunden.

Mit dem in Figur 1 nur als Block dargestellten programmierbaren Sensor-Interface PSI wird eine Signalvorverarbeitung der analogen Signale der Sensoren S1 bis S8 vorgenommen, deren Ergebnis dann der Steuereinrichtung SE übergeben wird. Im Zuge dieser Signalvorverarbeitung wird zunächst über die Steuereinrichtung SE und die serielle Schnittstelle SS einer der Sensoren S1 bis S8 ausgewählt. Das jeweils anstehende digitalisierte Signal des ausgewählten Sensors wird dann in einen Signal-Bereich von insgesamt acht möglichen Signal-Bereichen eingeordnet, worauf die diesem Signal-Bereich zugeordnete binäre Eingangsleitung BE der Steuereinrichtung SE gesetzt wird und die sieben den anderen Signal-Bereichen zugeordneten binären Eingangsleitungen BE gelöscht werden. Die von der Steuereinrichtung SE durch das Signal des ausgewählten Sensors und durch dessen Einordnung in einen Signal-Bereich empfangenen Informationen können dann im weiteren Programmablauf entsprechend berücksichtigt werden. Die dem programmierbaren Sensor-Interface PSI zugeordnete Anzeigeeinrichtung AE zeigt dabei die Nummer des jeweils aus den Sensoren S1 bis S8 ausgewählten Sensors, die Grösse des digitalisierten Signals des ausgewählten Sensors und den Signal-Bereich an, in welchen das aktuelle Signal eingeordnet ist.

Bei dem in Figur 1 dargestellten Ausführungsbeispiel ist eine Steuereinrichtung SE vorhanden, bei welcher die serielle Schnittstelle SS zur Verfügung steht. Wie bereits erwähnt wurde, kann dann über diese serielle Schnittstelle SS durch die Steuereinrichtung SE jeweils einer der Sensoren S1 bis S8 ausgewählt werden. Die serielle Schnittstelle SS hat ferner den Vorteil, dass über die Steuereinrichtung SE die den Sensoren S1 bis S8 zugeordneten Signal-Bereiche vorgegeben und während des Programmablaufs auch variiert werden können.

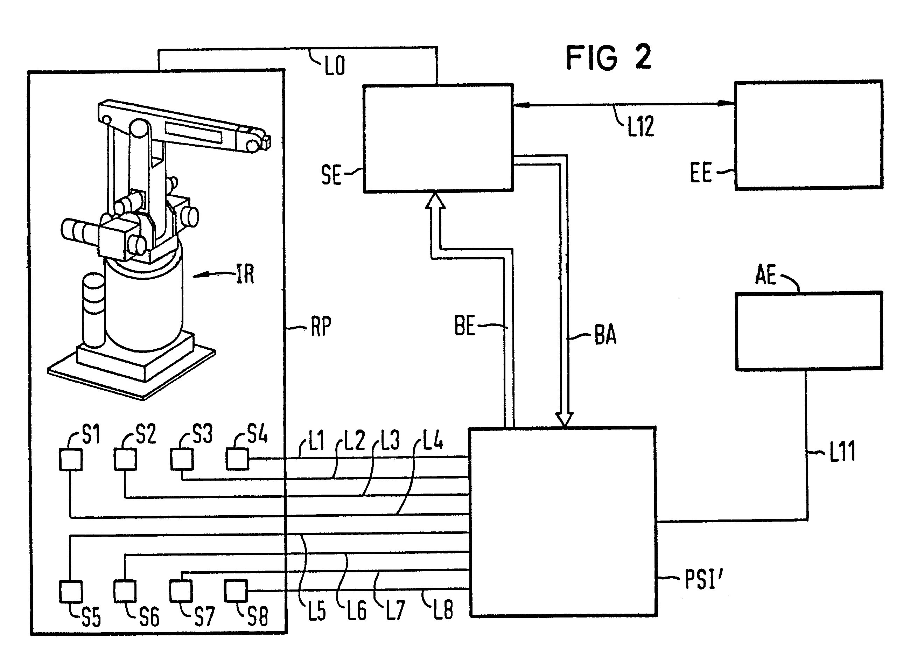

Bei dem in Figur 2 dargestellten Ausführungsbeispiel stehen anstelle der seriellen Schnittstelle SS drei parallele binäre Ausgangsleitungen BA der Steuereinrichtung SE zur Verfügung, wobei die Steuereinrichtung SE direkt über eine Leitung L12 mit der zugeordneten Endeinrichtung EE verbunden ist. Das in Figur 2 mit PSI' bezeichnete programmierbare Sensor-Interface ist also an die drei parallelen binären Ausgangsleitungen BA der Steuereinrichtung SE so angeschlossen, dass jeder der Sensoren S1 bis S8 über die Steuereinrichtung SE ausgewählt werden kann, da bei drei parallelen binären Leitungen ja insgesamt acht Möglichkeiten zur Verfügung stehen. Über die binären Ausgangsleitungen BA können dann aber die den Sensoren S1 bis S8 zugeordneten Signal-Bereiche nicht mehr vorgegeben oder während des Programmablaufs variiert werden, d.h. die Schwellwerte der Signal-Bereiche müssen in einem Speicher des programmierbaren Sensor-Interface PSI' fest hinterlegt werden.

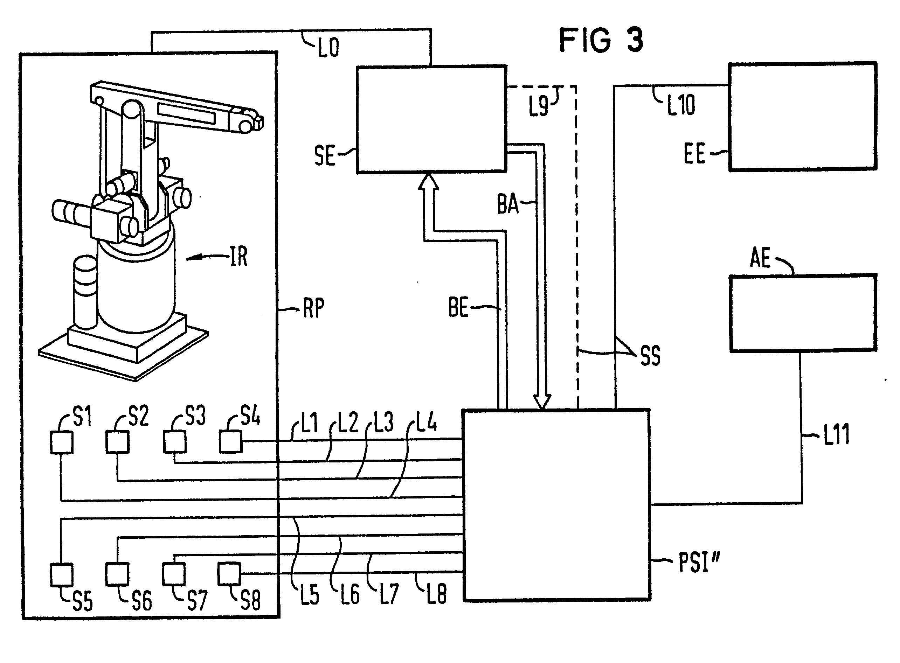

Bei dem in Figur 3 dargestellten Ausführungsbeispiel ist ein programmierbares Sensor-Interface PSI'' vorgesehen, welches sowohl für die serielle Betriebsart nach Figur 1 als auch für die parallele Betriebsart nach Figur 2 geeignet ist. Dementsprechend kann das programmierbare Sensor-Interface PSI'' an eine Steuereinrichtung SE angeschlossen werden, bei welcher mit den Leitungen L9 und L10 eine serielle Schnittstelle SS zur Verfügung steht, während andererseits auch der Anschluss an eine Steuereinrichtung SE ermöglicht wird, bei welcher binäre Ausgangsleitungen BA zur Verfügung stehen. Sind wie im dargestellten Ausführungsbeispiel beide Anschlussarten, also der Anschluss über eine serielle Schnittstelle SS und die gleichzeitige Verbindung über binäre Ausgangsleitungen BA vorgesehen, so kann die Leitung L9 entfallen, was in Figur 3 durch eine gestrichelte Darstellung dieser Leitung L9 verdeutlicht wird. Bei einer derartigen Anordnung besteht dann eine Wahlmöglichkeit zwischen der seriellen Betriebsart und der parallelen Betriebsart. Die für die parallele Betriebsart fest in einem Speicher des programmierbaren Sensor-Interface PSI'' hinterlegten Schwellwerte der Signal-Bereiche können nach Umschalten in die serielle Betriebsart vom Anwender zum Testen über die Endeinrichtung EE temporär verändert werden. Auf diese Weise ist dann ein Einrichtbetrieb realisiert. Die Steuerung kann dabei so ausgelegt werden, dass auch in der parallelen Betriebsart die Schwellwerte der Signal-Bereiche durch die serielle Schnittstelle SS eingegeben werden können, d.h. die Schwellwerte des durch die serielle Schnittstelle SS angewählten Sensors werden gesetzt, aktiviert ist jedoch derjenige der Sensoren S1 bis S8, der durch die drei parallelen binären Ausgangsleitungen BA ausgewählt ist.

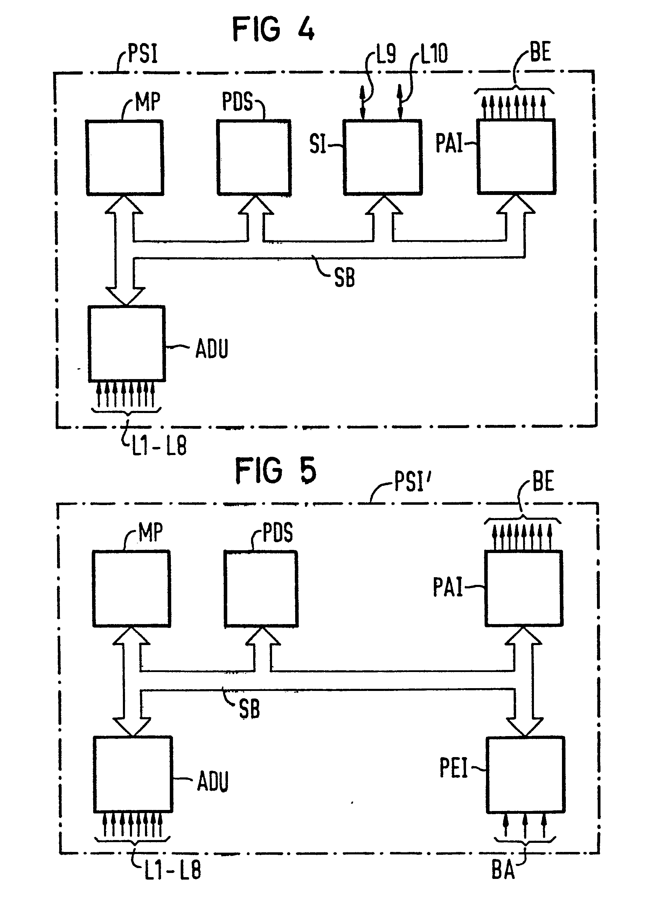

Figur 4 zeigt ein Blockschaltbild des programmierbaren Sensor-Interface PSI nach Figur 1. Wie zu erkennen ist, besteht das programmierbare Sensor-Interface PSI aus einem Mikroprozessor MP, einem Programm- und Datenspeicher PDS, einem seriellen Interface SI, einem parallelen Ausgabe-Interface PAI und einem Analog-Digital-Umsetzer ADU, wobei die genannten Einheiten durch einen Systembus SB miteinander verbunden sind. Dieser Systembus SB stellt dabei eine Zusammenfassung von Steuerbus, Adressenbus und Datenbus dar. Die analogen Signale der Sensoren S1 bis S8 (vgl. Figur 1) sind dem Analog-Digital-Umsetzer ADU über die entsprechenden Leitungen L1 bis L8 zuführbar, so dass das analoge Signal des jeweils aus den Sensoren S1 bis S8 ausgewählten Sensors im Analog-Digital-Umsetzer ADU digitalisiert werden kann. Das serielle Interface SI ist für den Anschluss der Leitungen L9 und L10 vorgesehen, d.h. es ermöglicht den Anschluss an die in Figur 1 dargestellte serielle Schnittstelle SS. Das serielle Interface SI hat dabei die Aufgabe, die seriellen Daten in parallele Daten umzuwandeln und eine Anpassung des Spannungspegels an den Mikroprozessor MP vorzunehmen. In entsprechender Weise ermöglicht das parallele Ausgabe-Interface PAI eine Anpassung und den Anschluss der acht binären Eingangsleitungen BE der Steuereinrichtung SE (vgl. Figur 1). Der Programm- und Datenspeicher PDS dient neben der Aufbewahrung des Programms auch für die Hinterlegung der Schwellwerte der den einzelnen Sensoren S1 bis S8 (vgl. Figur 1) zugeordneten Signal-Bereiche. Der Mikroprozessor MP ist dann so programmiert, dass er die Einordnung des im Analog-Digital-Umsetzer ADU digitalisierten Signals des jeweils ausgewählten Sensors in einen der zugeordneten Signal-Bereiche vornimmt und diese Einordnung durch Setzen der diesem Signal-Bereich zugeordneten binären Eingangsleitung BE an die Steuereinrichtung SE (vgl. Figur 1) weitergibt.

Jeder der Sensoren S1 bis S8 kann über die Endeinrichtung EE und/oder die Steuereinrichtung SE und die serielle Schnittstelle SS (vgl. Figur 1) angewählt werden, worauf dann die Schwellwerte der Signal-Bereiche dieses angewählten Sensors in den Programm- und Datenspeicher PDS übertragen werden können. Dieser Vorgang kann sowohl zur Vorgabe der Schwellwerte beim Programmieren als auch zur Variation der Schwellwerte während des Programmablaufs durchgeführt werden.

Figur 5 zeigt ein Blockschaltbild des programmierbaren Sensor-Interface PSI' nach Figur 2. Dieses für die parallele Betriebsart konzipierte programmierbare Sensor-Interface PSI' unterscheidet sich von dem für die serielle Betriebsart konzipierten programmierbaren Sensor-Interface PSI nach Figur 4 dadurch, dass das serielle Interface SI entfällt und dafür ein paralleles Eingabe-Interface PEI hinzukommt. Dieses parallele Eingabe-Interface PEI dient zum Anschluss der drei parallelen binären Ausgangsleitungen BA der Steuereinrichtung SE (vgl. Figur 2), d.h. es hat die Funktion einer parallelen Schnittstelle zwischen der Steuereinrichtung SE und dem programmierbaren Sensor-Interface PSI'. Die Schwellwerte der Signal-Bereiche der einzelnen Sensoren werden hier in einem Teil des Programm- und Datenspeichers PDS der als EPROM, d.h. als löschbarer, programmierbarer Festwertspeicher ausgebildet ist, fest hinterlegt.

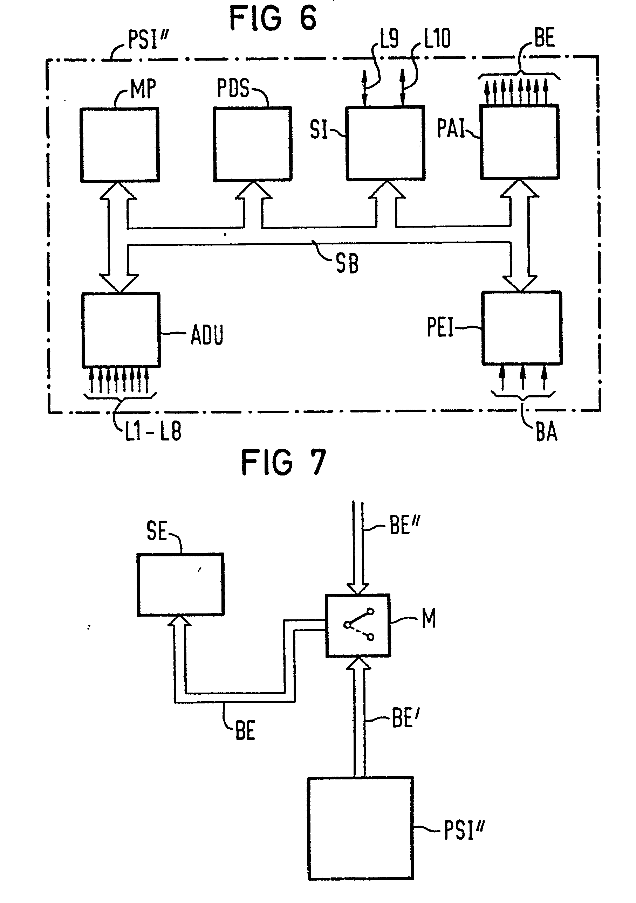

Figur 6 zeigt ein Blockschaltbild des programmierbaren Sensor-Interface PSI'' nach Figur 3. Dieses für die serielle und die parallele Betriebsart konzipierte programmierbare Sensor-Interface PSI'' entspricht einer Kombination des programmierbaren Sensor-Interface PSI nach Figur 4 und des programmierbaren Sensor-Interface PSI' nach Figur 5, d.h. es besitzt sowohl das serielle Interface SI als auch das parallele Eingabe-Interface PEI. Das programmierbare Sensor-Interface PSI'' kann somit flexibel an Steuereinrichtungen SE angepasst werden, bei denen eine serielle Schnittstelle SS oder parallele binäre Ausgangsleitungen BA (vgl. Figur 3) zur Verfügung stehen. Stehen die serielle Schnittstelle SS und die parallelen binären Ausgangsleitungen PA gleichzeitig zur Verfügung, so kann zwischen der seriellen und der parallelen Betriebsart gewählt werden.

Figur 7 zeigt am Beispiel des programmierbaren Sensor-Interface PSI'' nach den Figuren 3 und 6 den Einsatz eines Multiplexers M, durch welchen die binären Eingangsleitungen BE der Steuereinrichtung SE wahlweise mit der Peripherie oder dem programmierbaren Sensor-Interface PSI'' verbunden werden können. Dabei sind die von dem programmierbaren Sensor-Interface PSI'' zum Multiplexer M führenden binären Eingangsleitungen mit BE' und die von der Peripherie, beispielsweise von Ventilen, Signalgebern, Endschaltern und dgl. zum Multiplexer M führenden binären Eingangsleitungen mit BE'' bezeichnet. Wird dann durch die Steuereinrichtung SE beispielsweise durch ein vereinbartes Sonderzeichen an das programmierbare Sensor-Interface PSI'' der Befehl gegeben, dass einer der Sensoren S1 bis S8 (vgl. Figur 3) zu aktivieren ist, so schaltet der Multiplexer die Eingangsleitungen BE'' der Peripherie ab und die Eingangsleitungen BE' des programmierbaren Sensor-Interface PSI'' an. Je nach Einordnung des digitalisierten Signals des Sensors in einen der Signal-Bereiche wird dann die diesem Signal-Bereich zugeordnete binäre Eingangsleitung BE' bzw. BE gesetzt. Der Einsatz eines derartigen Multiplexers M ist somit insbesondere dann von Vorteil, wenn an der Steuereinrichtung SE nur eine begrenzte Anzahl von binären Eingängen zur Verfügung steht oder wenn die Signale einer grösseren Anzahl von Sensoren ausgewertet werden müssen.

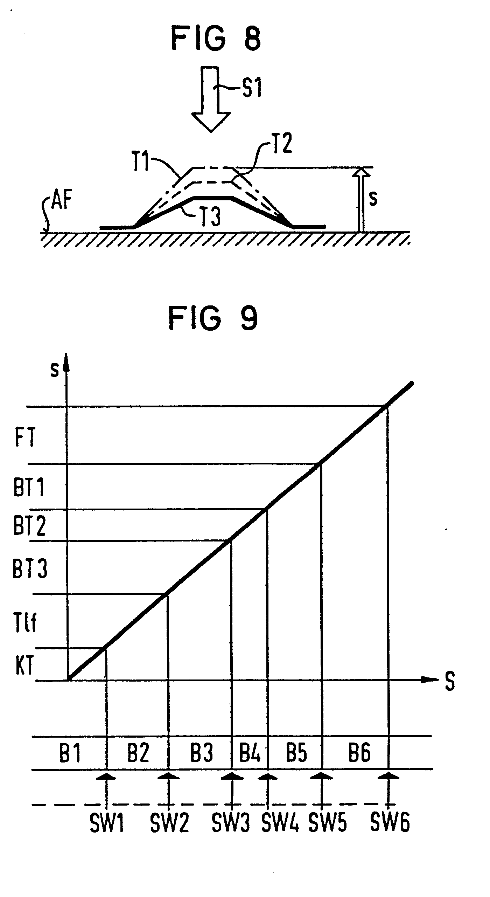

Figur 8 zeigt ein Ausführungsbeispiel für eine mit Hilfe eines programmierbaren Sensor-Interface realisierbare Klassifizierung. Es ist eine Situation dargestellt, bei welcher von dem Greifer eines Industrieroboters ein strichpunktiert dargestelltes Bauteil T1 oder ein gestrichelt dargestelltes Bauteil T2 oder ein mit ausgezogenen Linien dargestelltes Bauteil T3 erfasst werden soll. Die auf einer Auflagefläche AF liegenden Bauteile T1, T2 und T3 sind dabei verschieden hoch. Der durch einen Pfeil dargestellte und an dem Greifer angeordnete Sensor S1 (vgl. auch Figuren 1 bis 3) ist als Weg-Sensor ausgebildet, welcher den Abstand s der Oberseite der Bauteile T1 bzw. T2 bzw. T3 von der Auflagefläche AF erfasst. In dem Diagramm nach Figur 9 ist dann der Zusammenhang zwischen dem in Ordinatenrichtung aufgetragenen Abstand s und dem in Abszissenrichtung aufgetragenen Signal S des Sensors S1 aufgetragen. Das jeweils anstehende digitalisierte Signal S kann in insgesamt sechs Signal-Bereiche B1 bis B6 eingeordnet werden, deren Bereichsgrenzen durch in dem Programm- und Datenspeicher PDS (vgl. Figuren 4 bis 6) hinterlegte Schwellwerte SW1 bis SW6 vorgegeben werden können. Den Signal-Bereichen B1, B2, B3, B4, B5 und B6 können dann über die entsprechenden Bereiche des Abstandes s die Aussagen KT für kein Bauteil vorhanden bzw. Tlf für das Bauteil liegt falsch bzw. BT3 für das Bauteil T3 ist vorhanden bzw. BT2 für das Bauteil T2 ist vorhanden bzw. BT1 für das Bauteil T1 ist vorhanden bzw.

FT für das Vorhandensein eines falschen Bauteils zugeordnet werden. Durch die Einordnung des Signals S in sechs Signal-Bereiche B1 bis B6 können also die drei verschiedenen Bauteile, T1, T2 und T3 und drei Fehlersituationen unterschieden und im Programmablauf berücksichtigt werden.

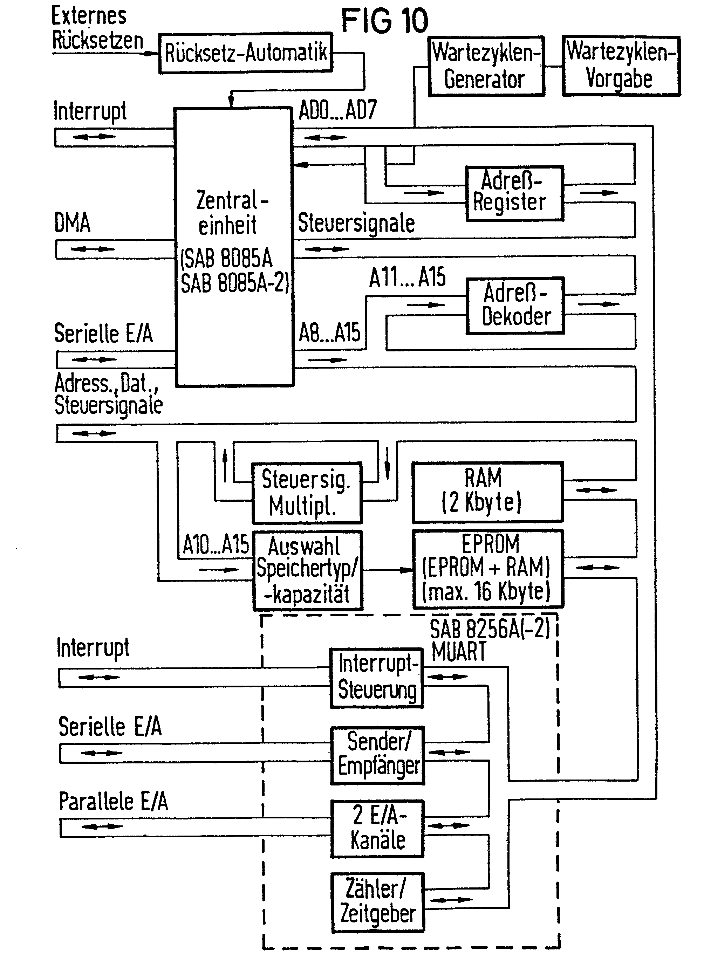

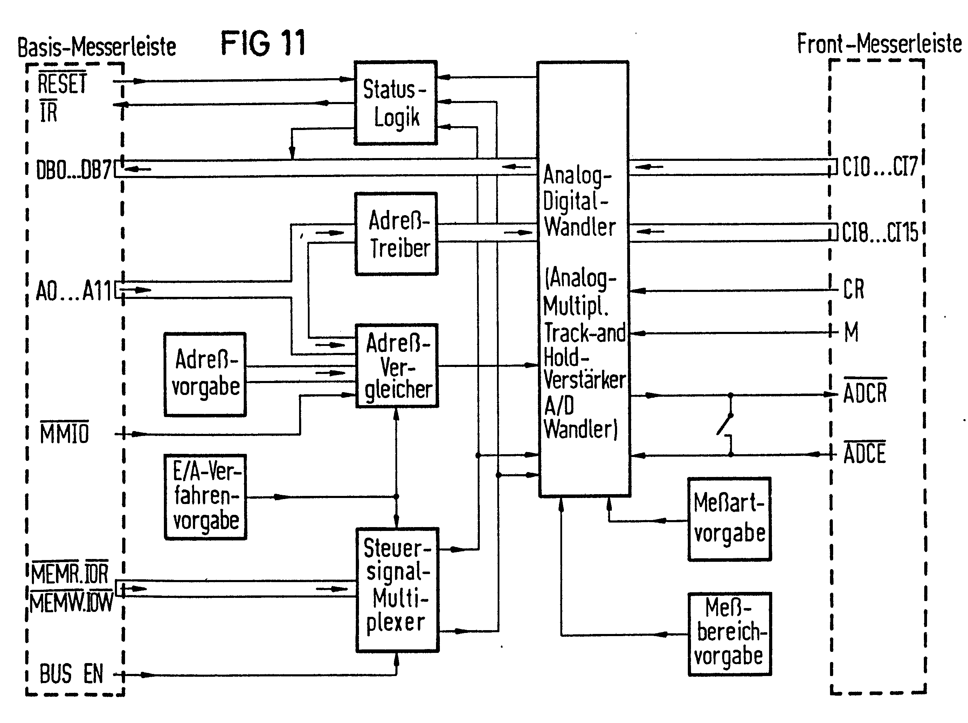

Die Figuren 10 und 11 zeigen detaillierte Blockschaltbilder einer Mikrocomputer-Baugruppe bzw. einer Analog-Digital-Umsetzer-Baugruppe, wobei aus diesen beiden Baugruppen das in Figur 6 dargestellte programmierbare Sensor-Interface PSI'' zusammengesetzt werden kann. Bei der Mikrocomputer-Baugruppe nach Figur 10 handelt es sich um einen handelsüblichen Zentralcomputer SMP-E4-A3 der beispielsweise in der Druckschrift «SMP Mikrocomputer-Baugruppensystem, SMP-E4-A3/A5 Zentralcomputer, technische Beschreibung 8.82» der Fa. Siemens AG näher beschrieben wird. Bei der Analog-Digital-Umsetzer-Baugruppe nach Figur 11 handelt es sich um einen handelsüblichen Baustein SMP-E230 der beispielsweise in der Druckschrift «Technische Beschreibung, Ausgabe 12.79, SMP-E230 Abzustand 1, Analoge Eingabe mit 16 Eingängen» der Fa. Siemens AG näher beschrieben wird. Bezüglich des Aufbaus und der Funktion der genannten Baugruppen wird auf die Beschriftung der Figuren 10 und 11 verwiesen.

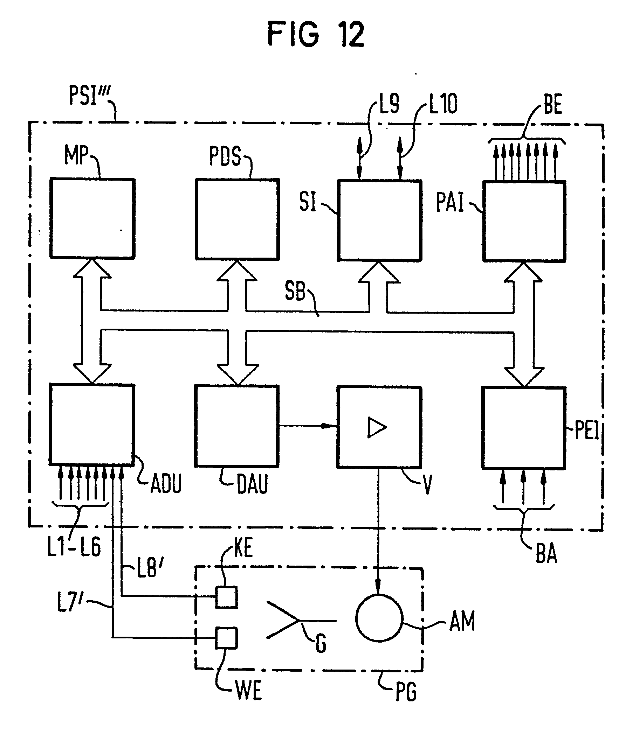

Zur Verknüpfung der in den Figuren 11 und 12 dargestellten Baugruppen zu dem programmierbaren Sensor-Interface PSI'' nach Figur 6 wird der in Figur 10 mit «Adressen, Daten, Steuersignale» bezeichnete Bus mit den entsprechenden Signalen der Basis-Messerleiste gemäss Figur 11 verbunden. Die in Figur 3 dargestellten Leitungen L1 bis L8 der Sensoren S1 bis S8 werden an die in Figur 11 mit «CI0 bis CI7» oder «CI8 bis CI15» bezeichneten Spannungseingänge angeschlossen. Die in den Figuren 3 und 6 dargestellten Leitungen L9 und L10 werden an den in Figur 10 mit «serielle E/A» bezeichneten Bus angeschlossen. Die in den Figuren 3 und 6 dargestellten binären Eingangsleitungen BE und binären Ausgangsleitungen BA werden an den in Figur 10 mit «parallele E/A» bezeichneten Bus angeschlossen.

Figur 12 zeigt ein Blockschaltbild eines programmierbaren Sensor-Interface mit zusätzlicher Regelung von Greiferstellung und/oder Greiferkraft eines programmierbaren Greifers. Derartige programmierbare Greifer können beispielsweise neben der geöffneten oder geschlossenen Greiferstellung auch auf andere Greiferstellungen mit beliebiger Lage der Greiferbacken eingestellt werden, so dass der Greifer beispielsweise auch in Hohlräume eingeführt werden kann, in die er in der vollständig geöffneten Greiferstellung nicht eindringen könnte. Bei einem programmierbaren Greifer kann aber auch die Greiferkraft eingestellt werden, so dass es beispielsweise beim Ergreifen empfindlicher Teile nicht zu einer Beschädigung dieser Teile kommen kann.

Das in Figur 12 dargestellte programmierbare Sensor-Interface PSI''' unterscheidet sich von dem in Figur 6 dargestellten programmierbaren Sensor-Interface PSI'' durch einen zusätzlich an den Systembus SB angeschlossenen Digital-Analog-Umsetzer DAU, welchem ein Verstärker V nachgeschaltet ist.

Der in sehr stark vereinfachter schematischer Darstellung gezeigte programmierbare Greifer PG umfasst den durch ein Symbol dargestellten Greifer G, einen Antriebsmotor AM für die Betätigung des Greifers G, eine Wegmesseinrichtung WE für die Erfassung der Stellung der Greiferbacken und eine Kraftmesseinrichtung KE für die Erfassung der Greiferkraft. Die Wegmesseinrichtung WE und die Kraftmesseinrichtung KE sind dabei über Leitungen L7' bzw. L8' an den Analog-Digital-Umsetzer ADU angeschlossen. Die übrigen zu dem Analog-Digital-Umsetzer ADU hinführenden Leitungen L1 bis L6 dienen wie bisher für den Anschluss der Sensoren S1 bis S6 (vgl. Figur 3).

Der Antriebsmotor AM kann nun über die Steuereinrichtung SE (vgl. Figur 3), den Mikroprozessor MP, den Digital-Analog-Umsetzer DAU und den Verstärker V so angewählt werden, dass die Greiferstellung und/oder die Greiferkraft mit dem Mikroprozessor MP als Regelglied und dem Antriebsmotor AM als Stellglied auf im Programmablauf vorgebbare Sollwerte eingestellt werden können. Die digitalisierten Istwertsignale der Wegmesseinrichtung WE und der Kraftmesseinrichtung KE werden hier also dem Mikroprozessor MP zugeführt, ohne dass eine Einordnung in Signal-Bereiche vorgenommen wird, wie das bei den Signalen der Sensoren S1 bis S6 der Fall ist.

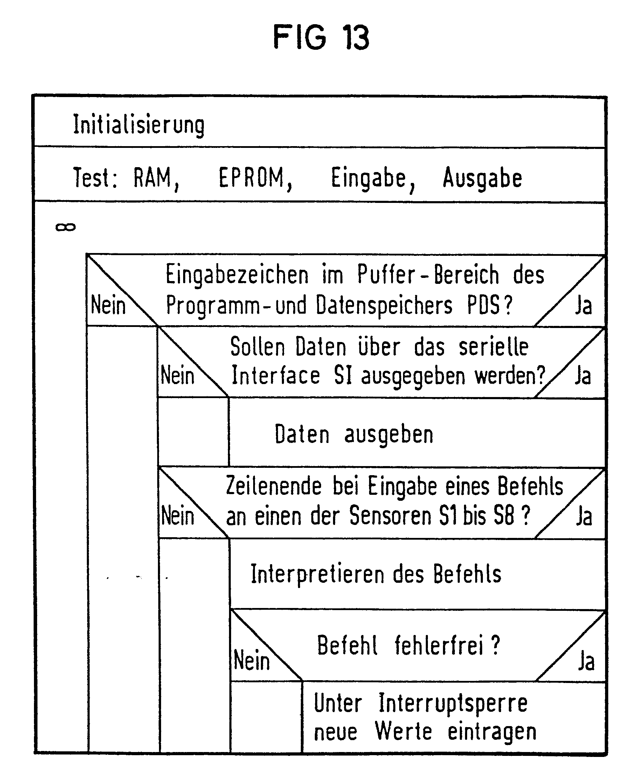

Bei den Figuren 13 bis 16 handelt es sich um Struktogramme, die auch als Nassi-Shneiderman-Diagramme bezeichnet werden und als grafische Hilfsmittel zur Darstellung von logischen Abläufen sowie zu deren funktionaler Beschreibung dienen. Die Figuren 13 bis 16 beziehen sich dabei auf logische Abläufe bei serieller Betriebsweise des in den Figuren 3 und 6 dargestellten programmierbaren Sensor-Interface PSI''.

Figur 13 zeigt die Struktogrammdarstellung des Hintergrundprogramms des programmierbaren Sensor-Interface PSI''. Ist unter den Eingabezeichen ein Befehl an einen der Sensoren S1 bis S8, so wird das Zeilenende abgewartet. Daraufhin wird die dem Befehl entsprechende Zeichenfolge interpretiert. Ergibt die anschliessende Prüfung dass der Befehl fehlerfrei ist, so werden unter Interruptsperre neue Werte wie z.B. eine neue Nummer eines Sensors, neue Bereichsgrenzen und dergleichen eingetragen.

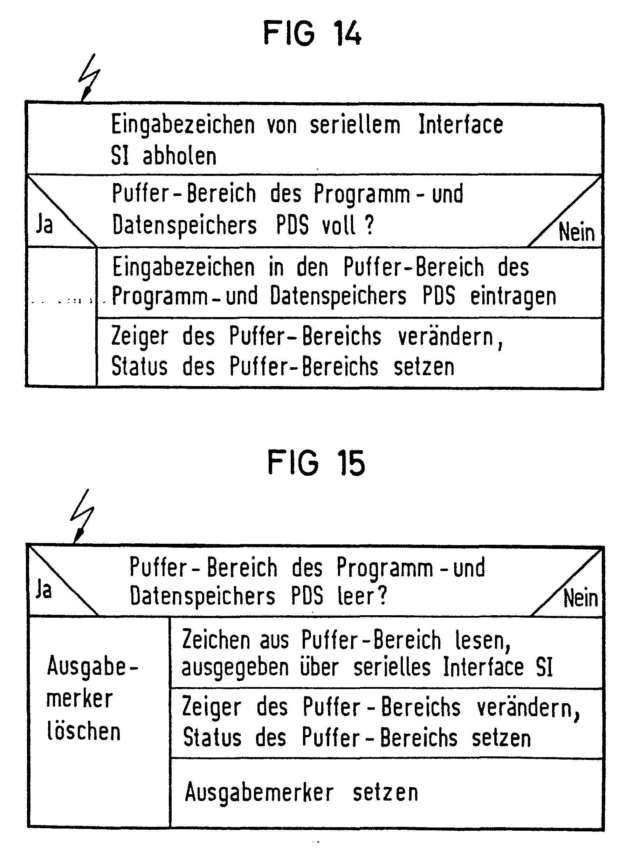

Figur 14 zeigt die Struktogrammdarstellung für die Interruptroutine zum Empfang von Daten über das serielle Interface SI des programmierbaren Sensor-Interface PSI''.

Figur 15 zeigt die Struktogrammdarstellung für die Interruptroutine zur Ausgabe von Daten über das serielle Interface SI des programmierbaren Sensor-Interface PSI''.

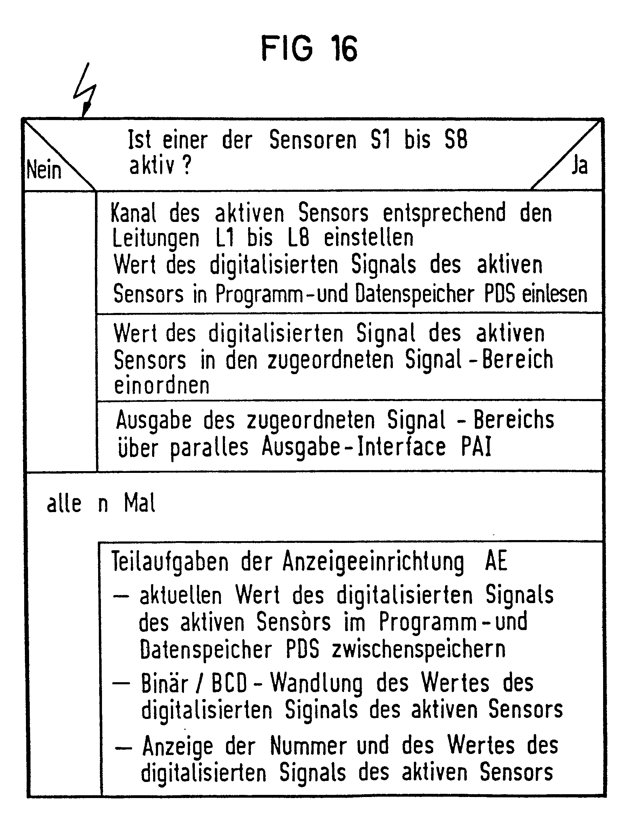

Figur 16 zeigt die Struktogrammdarstellung für die Interruptroutine bei der Einordnung der Signale eines Sensors in die zugeordneten Sensor-Bereiche, bei der Ausgabe der Signal-Bereiche über das parallele Ausgabe-Interface PAI des programmierbaren Sensor-Interface PSI'' sowie bei der entsprechenden Anzeige in der dem programmierbaren Sensor-Interface PSI'' zugeordneten Anzeigeeinrichtung AE. Die die Anzeigeeinrichtung AE betreffende Schleife wird dabei nur alle n Mal durchlaufen, wobei es sich bei n um eine wählbare ganze Zahl wie z.B. n=10 handelt.

**Patentansprüche**

1. Handhabungseinrichtung, insbesondere Industrieroboter (IR), mit einer Steuereinrichtung (SE) und mindestens einem über ein Interface an die Steuereinrichtung (SE) angeschlossenen Sensor (S1 bis S8), gekennzeichnet durch folgende Merkmale:

a) das Interface ist als programmierbares Sensor-Interface (PSI; PSI'; PSI'', PSI''') mit mindestens einem Mikroprozessor (MP) und mindestens einem Speicher (PDS) ausgebildet,

b) jedem Sensor (S1 bis S8) sind mindestens drei Signal-Bereiche (B1 bis B6) zugeordnet, deren Bereichsgrenzen durch im Speicher (PDS) hinterlegbare Schwellwerte (SW1 bis SW6) vorgebbar sind,

c) der Mikroprozessor (MP) ist derart programmierbar, dass die Einordnung des jeweils anstehenden digitalisierten Signals eines Sensors (S1 bis S8) in einen der zugeordneten Signal-Bereiche (B1 bis B6) an die Steuereinrichtung (SE) übertragbar ist.

2. Handhabungseinrichtung nach Anspruch 1, dadurch gekennzeichnet, dass jeder Sensor (S1 bis S8) über die Steuereinrichtung (SE) auswählbar ist und dass die Einordnung des jeweils anstehenden digitalisierten Signals des ausgewählten Sensors (S1 bis S8) in einen der zugeordneten Signal-Bereiche (B1 bis B6) an die Steuereinrichtung (SE) übertragbar ist.

3. Handhabungseinrichtung nach Anspruch 2, dadurch gekennzeichnet, dass jeder Sensor (S1 bis S8) über eine serielle Schnittstelle (SS) zwischen der Steuereinrichtung (SE) und einer zugeordneten Endeinrichtung (EE) auswählbar ist.

4. Handhabungseinrichtung nach Anspruch 2 oder 3, dadurch gekennzeichnet, dass jeder Sensor (S1 bis S8) über parallele binäre Ausgangsleitungen (BA) der Steuereinrichtung (SE) auswählbar ist.

5. Handhabungseinrichtung nach Anspruch 3, dadurch gekennzeichnet, dass über die Endeinrichtung (EE) und/oder die Steuereinrichtung (SE) und die serielle Schnittstelle (SS) jeder Sensor (S1 bis S8) anwählbar ist und dass die Schwellwerte (SW1 bis SW6) der Signal-Bereiche (B1 bis B6) des angewählten Sensors (S1 bis S8) in den Speicher (PDS) übertragbar sind.

6. Handhabungseinrichtung nach einem der Ansprüche 2 bis 5, dadurch gekennzeichnet, dass dem programmierbaren Sensor-Interface (PSI; PSI'; PSI'', PSI''') eine Anzeigeeinrichtung (AE) zugeordnet ist, durch welche der jeweils ausgewählte Sensor (S1 bis S8), das digitalisierte Si-

gnal des jeweils ausgewählten Sensors (S1 bis S8) und der diesem Signal zugeordnete Signal-Bereich (B1 bis B6) erkennbar sind.

7. Handhabungseinrichtung nach einem der vorhergehenden Ansprüche, dadurch gekennzeichnet, dass jedem Signal-Bereich (B1 bis B6) der Sensoren (S1 bis S8) eine binäre Eingangsleitung (BE) der Steuereinrichtung (SE) zugeordnet ist.

8. Handhabungseinrichtung nach Anspruch 7, dadurch gekennzeichnet, dass die binären Eingangsleitungen (BE) der Steuereinrichtung (SE) über einen Multiplexer (M) wahlweise mit dem programmierbaren Sensor-Interface (PSI; PSI'; PSI'', PSI''') oder der Peripherie verbindbar sind.

9. Handhabungseinrichtung nach einem der vorhergehenden Ansprüche, dadurch gekennzeichnet, dass die analogen Signale jedes Sensors (S1 bis S8) einem Analog-Digital-Umsetzer (ADU) des programmierbaren Sensor-Interface (PSI; PSI'; PSI'', PSI''') zuführbar sind.

10. Handhabungseinrichtung nach einem der vorhergehenden Ansprüche, dadurch gekennzeichnet, dass das programmierbare Sensor-Interface (PSI; PSI'; PSI'', PSI''') ein paralleles Ausgabe-Interface (PAI) besitzt, dessen binäre Ausgänge an zugeordnete binäre Eingangsleitungen (BE) der Steuereinrichtung (SE) angeschlossen sind.

11. Handhabungseinrichtung nach einem der vorhergehenden Ansprüche, dadurch gekennzeichnet, dass das programmierbare Sensor-Interface (PSI; PSI'', PSI''') ein serielles Interface (SI) besitzt, welches an eine serielle Schnittstelle (SS) zwischen der Steuereinrichtung (SE) und einer zugeordneten Endeinrichtung (EE) angeschlossen ist.

12. Handhabungseinrichtung nach einem der vorhergehenden Ansprüche, dadurch gekennzeichnet, dass das programmierbare Sensor-Interface (PSI'; PSI'', PSI''') ein paralleles Eingabe-Interface (PEI) besitzt, an dessen binäre Eingänge binäre Ausgangsleitungen (BE) der Steuereinrichtung (SE) angeschlossen sind.

13. Handhabungseinrichtung nach einem der vorhergehenden Ansprüche, dadurch gekennzeichnet, dass ein programmierbarer Greifer (PG) mit mindestens einer Wegmesseinrichtung (WE) und/oder mindestens einer Kraftmesseinrichtung (KE) und mindestens einem Antriebsmotor (AM) vorgesehen ist, dass die digitalisierten Istwert-Signale der Wegmesseinrichtung (WE) und/oder der Kraftmesseinrichtung (KE) dem Mikroprozessor (MP) zuführbar sind und dass der Antriebsmotor (AM) über die Steuereinrichtung (SE), den Mikroprozessor (MP) und einen Digital-Analog-Umsetzer (DAU) derart anwählbar ist, dass die Greiferstellung und/oder die Greiferkraft mit dem Mikroprozessor (MP) als Regelglied und dem Antriebsmotor (AM) als Stellglied auf vorgebbare Sollwerte einstellbar sind.

14. Handhabungseinrichtung nach den Ansprüchen 3 und 13, dadurch gekennzeichnet, dass die Sollwerte für die Greiferstellung und/oder die Greiferkraft über die Steuereinrichtung (SE) und die serielle Schnittstelle (SS) vorgebbar sind.

15. Handhabungseinrichtung nach den Ansprüchen 4 und 13, dadurch gekennzeichnet, dass die Sollwerte für die Greiferstellung und/oder die Greiferkraft im Speicher (PDS) hinterlegbar sind.

**Revendications**

1. Dispositif de manipulation, en particulier robot industriel (IR), comportant un dispositif de commande (SE) et au moins un capteur (S1 à S8) raccordé à travers une interface au dispositif de commande (SE), caractérisé en ce que:

a) l'interface est réalisée comme une interface de capteurs programmable (PSI; PSI'; PSI'', PSI''') possédant au moins un micro-ordinateur (MP) et au moins une mémoire (PDS);

b) au moins trois plages de signaux (B1 à B6) sont coordonnées à chaque capteur (S1 à S8), plages dont les limites peuvent être préfixées par des seuils (SW1 à SW6) pouvant être stockés dans la mémoire (PDS);

c) le micro-ordinateur (MP) est programmable de manière que le classement du signal numérisé fourni chaque fois par un capteur (S1 à S8), dans l'une des plages de signaux (B1 à B6) coordonnées, puisse être transféré au dispositif de commande (SE).

2. Dispositif selon la revendication 1, caractérisé en ce que chaque capteur (S1 à S8) peut être sélecté à travers le dispositif de commande (SE) et que le classement du signal numérisé fourni chaque fois par le capteur (S1 à S8) sélecté, dans l'une des plages de signaux (B1 à B6) coordonnées, peut être transféré au dispositif de commande (SE).

3. Dispositif selon la revendication 2, caractérisé en ce que chaque capteur (S1 à S8) peut être sélecté à travers une jonction sérielle (SS) entre le dispositif de commande (SE) et un dispositif final (EE) coordonné.

4. Dispositif selon la revendication 2 ou 3, caractérisé en ce que chaque capteur (S1 à S8) peut être sélecté à travers des lignes de sortie (BA) binaires, parallèles, du dispositif de commande (SE).

5. Dispositif selon la revendication 3, caractérisé en ce que chaque capteur (S1 à S8) peut être sélecté à travers le dispositif final (EE) et/ou le dispositif de commande (SE) et la jonction sérielle (SS) et que les seuils (SW1 à SW6) des plages de signaux (B1 à B6) du capteur (S1 à S8) sélectés peuvent être transférés dans la mémoire (PDS).

6. Dispositif selon une des revendications 2 à 5, caractérisé en ce qu'un afficheur (AE) est coordonné à l'interface de capteurs programmable (PSI; PSI'; PSI'', PSI'''), afficheur au moyen duquel sont indiqués chaque fois le capteur (S1 à S8) sélecté, le signal numérisé du capteur S1 à S8) sélecté et la plage de signaux (B1 à B6) coordonnée à ce signal.

7. Dispositif selon une des revendications précédentes, caractérisé en ce qu'une ligne d'entrée (BE) binaire du dispositif de commande (SE) est coordonnée à chaque plage de signaux (B1 à B6) des capteurs (S1 à S8).

8. Dispositif selon la revendication 7, caractérisé en ce que les lignes d'entrée (BE) binaires du dispositif de commande (SE) peuvent être connectées sélectivement, au moyen d'un multiplexeur (M), à l'interface de capteurs programmable (PSI; PSI'; PSI'', PSI''') ou à l'équipement périphérique.

9. Dispositif selon une des revendications précédentes, caractérisé en ce que les signaux analogiques de chaque capteur (S1 à S8) peuvent être appliqués à un convertisseur analogique-numérique (ADU) de l'interface de capteurs programmable (PSI; PSI'; PSI'', PSI''').

10. Dispositif selon une des revendications précédentes, caractérisé en ce que l'interface de capteurs programmable (PSI; PSI'; PSI'', PSI''') possède une interface de sortie parallèle (PAI) dont les sorties binaires sont connectées à des lignes d'entrée binaires (BE) coordonnées du dispositif de commande. (SE).

11. Dispositif selon une des revendications précédentes, caractérisé en ce que l'interface de capteurs programmable (PSI; PSI'', PSI''') possède une interface sérielle (SI) qui est connectée à une jonction sérielle (SS) entre le dispositif de commande (SE) et un dispositif final (EE) coordonné.

12. Dispositif selon une des revendications précédentes, caractérisé en ce que l'interface de capteurs programmable (PSI; PSI'', PSI''') possède une interface d'entrée parallèle (PEI), aux entrées binaires de laquelle sont connectées des lignes de sortie binaires (BE) du dispositif de commande (SE).

13. Dispositif selon une des revendications précédentes, caractérisé en ce qu'il comprend une pince programmable (PG) avec au moins un dispositif de mesure de déplacement (WE) et/ou au moins un dispositif de mesure de force (KE) et au moins un moteur d'entraînement (AM), que les signaux numérisés de valeur réelle du dispositif de mesure de déplacement (WE) et/ou du dispositif de mesure de force (KE) peuvent être appliqués au micro-ordinateur (MP) et qu'une liaison peut être établie sélectivement avec le moteur d'entraînement (AM), à travers le dispositif de commande (SE), le micro-ordinateur (MP) et un convertisseur numérique-analogique (DAU), de manière que la position de la pince et/ou la force de la pince soient réglables à des valeurs de consigne pouvant être préfixées, avec utilisation du micro-ordinateur (MP) comme organe de réglage et du moteur d'entraînement (AM) comme organe d'asservissement.

14. Dispositif selon les revendications 3 et 13, caractérisé en ce que les valeurs de consigne pour la position et/ou la force de la pince peuvent être préfixées à travers le dispositif de commande (SE) et la jonction sérielle (SS).

15. Dispositif selon les revendications 4 et 13, caractérisé en ce que les valeurs de consigne pour la position et/ou la force de la pince peuvent être stockées dans la mémoire (PDS).

**Claims**

1. A manipulation device, in particular an industrial robot (IR) comprising a control device (SE) and at least one sensor (S1 to S8) which is connected to the control device (SE) via an interface, characterised by the following features:

a) the interface comprises a programmable sensor-interface (PSI; PSI'; PSI'', PSI''') with at least one microprocessor (MP) and at least one store (PDS),

b) each sensor (S1 to S8) is assigned at least three signal ranges (B1 to B6), the boundaries of which can be predetermined by threshold values (SW1 to SW6) which can be stored in the store (PDS),

c) the microprocessor (MP) can be programmed in such manner that the classification of each occurring digitalised signal of a sensor (S1 to S8) into one of the assigned signal ranges (B1 to B6) can be transmitted to the control device (SE).

2. A manipulation device as claimed in claim 1, characterised in that each sensor (S1 to S8) can be selected via the control device (SE) and that the classification of each occurring digitalised signal of the selected sensor (S1 to S8) into one of the assigned signal ranges (B1 to B6) can be transmitted to the control device (SE).

3. A manipulation device as claimed in claim 2, characterised in that each sensor (S1 to S8) can be selected via a series interface (SS) between the control device (SE) and an assigned terminal device (EE).

4. A manipulation device as claimed in claim 2 or 3, characterised in that each sensor (S1 to S8) can be selected via parallel, binary output lines (BA) of the control device (SE).

5. A handling device as claimed in claim 3, characterised in that each sensor (S1 to S8) can be selected via the terminal device (EE) and/or the control device (SE) and the series interface (SS), and that the threshold values (SW1 to SW6) of the signal ranges (B1 to B6) of the selected sensor (S1 to S8) can be transferred to the store (PDS).

6. A manipulation device as claimed in one of the claims 2 to 5, characterised in that the programmable sensor interface (PSI; PSI'; PSI''; PSI''') is assigned a display device (AE) by means of which the selected sensor (S1 to S8), the digitalised signal of the selected sensor (S1 to S8), and the signal range (B1 to B6) assigned to this signal can be recognised.

7. A manipulation device as claimed in one of the preceding claims, characterised in that each signal range (B1 to B6) of the sensors (S1 to S8) is assigned a binary input line (BE) of the control device (SE).

8. A manipulation device as claimed in claim 7, characterised in that the binary input lines (BE) of the control device (SE) can be connected via a multiplexer (M) selectively to the programmable sensor interface (PSI; PSI'; PSI''; PSI''') or to the peripheral.

9. A manipulation device as claimed in one of the preceding claims, characterised in that the analogue signals of each sensor (S1 to S8) can be supplied to an analogue-digital converter (ADU) of the programmable sensor interface (PSI; PSI'; PSI''; PSI''').

10. A manipulation device as claimed in one of the preceding claims, characterised in that the programmable sensor interface (PSI; PSI'; PSI''; PSI''') has a parallel output-interface (PAI) whose binary outputs are connected to assigned, binary input lines (BE) of the control device (SE).

11. A manipulation device as claimed in one of the preceding claims, characterised in that the programmable sensor-interface (PSI; PSI''; PSI''') has a series interface (SI) which is connected to a series interface (SS) between the control device (SE) and an assigned terminal device (EE).

12. A manipulation device as claimed in one of the preceding claims, characterised in that the programmable sensor interface (PSI'; PSI''; PSI''') has a parallel input-interface (PEI) whose binary inputs are connected to binary output lines (BE) of the control device (SE).

13. A manipulation device as claimed in one of the preceding claims, characterised in that a programmable gripper (PG) is provided with at least one path measuring device (WE) and/or at least one fourth measuring device (KE) and at least one drive motor (AM), that the digitalised actual value signals of the path measuring device (WE) and/or of the fourth measuring device (KE) can be supplied to the microprocessor (MP), and that the drive motor (AM) can be selected via the control device (SE), the microprocessor (MP), and a digital-analogue converter (DAU) in such manner that the gripper position and/or the gripper force can be set at predeterminable theoretical values using the microprocessor (MP) as control element and the drive motor (AM) as fine control element.

14. A manipulation device as claimed in claims 3 and 13, characterised in that the theoretical values for the gripper position and/or the gripper force can be pre-set via the control device (SE) and the series interface (SS).

15. A manipulation device as claimed in claims 4 and 13, characterised in that the theoretical values for the gripper position and/or the gripper force can be stored in the store (PDS).

FIG 1

FIG 2

FIG 3

# FIG 4

# FIG 5

## FIG 6

## FIG 7

# FIG 8

# FIG 9

FIG 10

Externes Rücksetzen → | Rücksetz-Automatik |

| Wartezyklen-Generator | | Wartezyklen-Vorgabe |

Interrupt

AD0...AD7

| Zentral-einheit (SAB 8085A SAB 8085A-2) |

DMA

Steuersignale

| Adreß-Register |

A11...A15

| Adreß-Dekoder |

Serielle E/A

A8...A15

Adress., Dat., Steuersignale

| Steuersig. Multipl. |

| RAM (2 Kbyte) |

A10...A15

| Auswahl Speichertyp/-kapazität |

| EPROM (EPROM + RAM) (max. 16 Kbyte) |

SAB 8256A(-2) MUART

Interrupt

| Interrupt-Steuerung |

Serielle E/A

| Sender/Empfänger |

Parallele E/A

| 2 E/A-Kanäle |

| Zähler/Zeitgeber |

FIG 11

Front-Messerleiste

C10...C17
C18...C15
CR
M
$\overline{ADCR}$
$\overline{ADCE}$

Meßart-vorgabe

Meß-bereich-vorgabe

Analog-Digital-Wandler
(Analog-Multipl. Track-and-Hold-Verstärker A/D Wandler)

Status-Logik

Adreß-Treiber

Adreß-Ver-gleicher

Steuer-signal-Multi-plexer

Adreß-vorgabe

E/A-Ver-fahren-vorgabe

Basis-Messerleiste

$\overline{RESET}$
$\overline{IR}$

DB0...DB7

A0...A11

$\overline{MMIO}$

$\overline{MEMR.IOR}$
$\overline{MEMW.IOW}$

BUS EN

25

FIG 12

## FIG 13

| Initialisierung |
|---|

| Test: RAM,    EPROM,    Eingabe,    Ausgabe |
|---|

∞

| Nein | Eingabezeichen im Puffer-Bereich des Programm-und Datenspeichers PDS? | Ja |
|---|---|---|

| Nein | Sollen Daten über das serielle Interface SI ausgegeben werden? | Ja |
|---|---|---|

| Daten ausgeben |
|---|

| Nein | Zeilenende bei Eingabe eines Befehls an einen der Sensoren S1 bis S8 ? | Ja |
|---|---|---|

| Interpretieren des Befehls |
|---|

| Nein | Befehl fehlerfrei ? | Ja |
|---|---|---|

| Unter Interruptsperre neue Werte eintragen |
|---|

## 11/12

## FIG 14

| | Eingabezeichen von seriellem Interface SI abholen | |
|---|---|---|
| Ja | Puffer – Bereich des Programm – und Datenspeichers PDS voll ? | Nein |
| | Eingabezeichen in den Puffer-Bereich des Programm – und Datenspeichers PDS eintragen | |
| | Zeiger des Puffer-Bereichs verändern, Status des Puffer-Bereichs setzen | |

## FIG 15

| | Puffer – Bereich des Programm – und Datenspeichers PDS leer? | |
|---|---|---|
| Ja | | Nein |
| Ausgabe-merker löschen | Zeichen aus Puffer-Bereich lesen, ausgegeben über serielles Interface SI | |
| | Zeiger des Puffer – Bereichs verändern, Status des Puffer – Bereichs setzen | |
| | Ausgabemerker setzen | |

## FIG 16

| Nein | Ist einer der Sensoren S1 bis S8 aktiv ? | Ja |
|---|---|---|

| | Kanal des aktiven Sensors entsprechend den Leitungen L1 bis L8 einstellen<br>Wert des digitalisierten Signals des aktiven Sensors in Programm-und Datenspeicher PDS einlesen |
|---|---|
| | Wert des digitalisierten Signal des aktiven Sensors in den zugeordneten Signal-Bereich einordnen |
| | Ausgabe des zugeordneten Signal-Bereichs über paralles Ausgabe-Interface PAI |

alle n Mal

Teilaufgaben der Anzeigeeinrichtung AE

— aktuellen Wert des digitalisierten Signals des aktiven Sensors im Programm-und Datenspeicher PDS zwischenspeichern

— Binär / BCD - Wandlung des Wertes des digitalisierten Siginals des aktiven Sensors

— Anzeige der Nummer und des Wertes des digitalisierten Signals des aktiven Sensors